# EUROPÄISCHE PATENTSCHRIFT

(11) **EP 1 537 379 B1**
(45) Veröffentlichungstag und Bekanntmachung des Hinweises auf die Patenterteilung: **14.11.2007**
(21) Anmeldenummer: 03750354.7
(22) Anmeldetag: 12.09.2003
(51) Int. Cl.: G01B 11/27, G01B 11/275

(54) **VERFAHREN UND VORRICHTUNG ZUR KONTROLLE DER FAHRWERKSGEOMETRIE EINES KETTEN- ODER RIEMENGETRIEBENEN FAHRZEUGES**
METHOD AND DEVICE FOR CONTROLLING THE GEOMETRY OF THE CHASSIS OF A CHAIN OR BELT DRIVEN VEHICLE
PROCEDE ET DISPOSITIF POUR CONTROLER LA GEOMETRIE DU SYSTEME DE ROULEMENT D'UN VEHICULE ENTRAINE PAR CHAINE OU COURROIE

(30) Priorität: 12.09.2002 DE 10242535
(43) Veröffentlichungstag der Anmeldung: 08.06.2005
(73) Patentinhaber: Höbel, Glenn, 67707 Schopp (DE); Bayer, Reiner, 67707 Schopp (DE)
(72) Erfinder: Höbel, Glenn, 67707 Schopp (DE); Bayer, Reiner, 67707 Schopp (DE)
(74) Vertreter: Vièl, Christof
(86) Internationale Anmeldenummer: PCT/DE2003/003043
(87) Internationale Veröffentlichungsnummer: WO 2004/027346

(56) Entgegenhaltungen:
- EP-A- 0 945 333
- EP-A- 1 120 627
- FR-A- 2 473 712
- GB-A- 2 343 006
- US-A- 6 031 616
- US-A1- 2002 088 128

## Beschreibung

Die Erfindung betrifft ein Verfahren und eine Vorrichtung zur Kontrolle der Fahrwerksgeometrie eines ketten- oder riemengetriebenen Fahrzeuges.

In vielen Bereichen, insbesondere bei Fahr- und Motorrädern kommt es gelegentlich zu einer Positionsveränderung des Kettenrades, z.B. durch mechanische Belastungen, Wartungsarbeiten, Reifenwechsel oder Wechsel der Sekundär-Antriebsteile. Durch die hierdurch verursachte Schrägstellung des Kettenrades in Bezug auf den Riemen oder die Kette ergibt sich eine unregelmäßige und höhere Abnutzung als bei korrekter Flucht. Entsprechendes gilt auch für andere Riemen- oder Kettentriebe, z.B. bei Maschinen.

Als Stand der Technik ist es bekannt, die Fluchtung von Riemen oder Kette mit der Riemenscheibe bzw. mit dem Kettenrad mittels Schnüren oder Richtlatten zu kontrollieren, was sowohl zeitaufwendig als auch ungenau ist.

Weiterhin ist es bekannt, Markierungen an der Achsaufnahme von Motorrädern vorzusehen. Diese sind allerdings nicht sehr zuverlässig, da bereits eine geringe Fehlstellung über die Länge der Kette einen Fehler von einigen Millimetern mit sich bringt. Eine Möglichkeit der Kontrolle der Einstellung ist kaum gegeben, es sei denn mit kostspieligen Meßmethoden, die im Werkstattbetrieb für eine Routinekontrolle kaum geeignet sind.

Es ist eine Vorrichtung zur Kontrolle der Kettenflucht bei Motorrädern bekannt, bei der ein Laser unter dem Fahrzeug auf einer am Schwingendrehpunkt befestigten Gleitschiene angeordnet wird. An dem Hinterrad werden seitlich Schablonen angebracht, auf die der Laserstrahl gerichtet wird. Bei dieser Vorrichtung stellt sich jedoch als nachteilig heraus, daß die Anbringung nur mit einem Motorradheber und erheblichem Aufwand bewerkstelligt werden kann. Zudem werden die Schablonen seitlich an den Reifengummi angelegt, wodurch Sich ein relativ großer Meßfehler ergibt. Schließlich ist die Vorrichtung relativ teuer.

Bei der oben beschriebenen Vorrichtung werden die beiden Schablonen mit einem feststellbaren Stab verbunden, welcher durch das Rad hindurch am Felgenbett vorbei geführt werden muß. Bei einem Scheibenrad ist dies nicht möglich, weshalb diese Vorrichtung bei einem geschlossenen Träger zwischen Felgenbett und Radachse nicht angebracht werden kann.

Auch bei der Vorrichtung, wie sie aus der GB 2 343 006 A bekannt ist, werden die Lichtquelle und die Ableseskala an den Reifen des Fahrzeuges angelegt, was einen relativ großen Meßfehler mit sich bringt.

Die Vorrichtung zum Kontrollieren der Fluchtung von Fahrzeugrädern gemäß der FR 2 473 712 A besteht aus zwei Gestellen, die jeweils am Vorder- und am Hinterrad befestigt und ausgerichtet werden und jeweils ein Leuchtmittel aufweisen, das auf einen Spiegel am gegenüberliegenden Gestell gerichtet ist.

Aus der DE 199 83 717 T1 sind eine Vorrichtung und ein Verfahren zur Ausrichtung von mindestens einer ausrichtbaren Ebene auf zumindest eine Bezugsebene bekannt. Diese Vorrichtung dient insbesondere zum Ausrichten eines treibenden Rades zu einem angetriebenen Rad oder umgekehrt und weist ein Hauptteil, eine Lichtquelle und eine Anzahl von Kontaktpunkten auf, wobei die Lichtquelle ausgebildet ist, um einen Laserstrahl mit einem Streuwinkel in einer Ebene auszusenden. Auch diese Vorrichtung ist relativ aufwendig und erfordert in vielen Fällen das zeitaufwendige Befreien zumindest eines der Räder des Riemen- oder Kettentriebes von Schutzvorrichtungen, z.B. den Abbau eines Schutzbleches oder eines Kettenschutzes.

Ebenso ist in der DE 100 25 918 A1 eine Vorrichtung zum Ausrichten von Riemenscheiben mittels Laserstrahlen bekannt, bei dem ein Laserstrahl-Sender an eine Stirnfläche einer ersten Riemenscheibe angelegt wird und ein von diesem Laserstrahl-Sender ausgehender Flachstrahl auf Targets fällt, die an der Stirnseite der zweiten Riemenscheibe angelegt sind. Die DE 199 14 300 A1 beschreibt ebenfalls eine Fluchtungsmeßanordnung für parallelachsig angeordnete Riemenscheiben, bei der ebenfalls mit an der Stirnseite der Riemenscheibe angeordneten Targets gearbeitet wird. Die US 6,031,616 B beschreibt ein Meßverfahren, bei dem Lasermodule an die Seitenflächen beider Riemenscheiben angelegt werden und Laserstrahlen von einem Lasermodul auf das andere Lasermodul gesendet werden. Jedoch ist in vielen Fällen, insbesondere im Bereich der Zweiräder, die zweite Riemenscheibe nur schwer zugänglich, so daß diese Vorrichtung nur nach Freilegung der zweiten Riemenscheibe verwendbar ist.

Weiterhin ist aus der DE 198 38 172 A1 eine Meßanordnung für die Ausrichtung von Riemenscheiben bekannt, bei der ein Laser bei entferntem Riemen auf einer der Riemenscheiben angeordnet wird und auf die Mittelrippe der anderen Riemenscheibe gerichtet wird. Dies ist jedoch nur bei entferntem Riemen möglich, was die Anwendung dieser Meßanordung außerordentlich einschränkt. Bei Motorrädern mit Hinterradschwinge liegt der Schwingendrehpunkt zwischen dem Kettenrad des Hinterrades und dem Motorritzel. Somit ist die Sicht auf das Ritzel verdeckt.

Bei der Fahrwerksgeometrie eines ketten- oder riemengetriebenen Fahrzeuges, insbesondere bei Fahrrädern, Motorrädern, Motorrädern mit Seitenwagen, Trikes und ATV-Quad, ist nicht nur die Anordnung der beiden Kettenräder bzw. Riemenscheiben zueinander von Bedeutung, sondern auch die Spur des Fahrzeuges, die beispielsweise das Kurvenverhalten massiv beeinflußt. Aufgrund von konstruktiven Zwängen und Serienstreuungen in der Massenproduktion kann bei Großserienmotorrädern ein Spurversatz in nicht geringem Maße vorliegen. Optimal bei Einspurfahrzeugen ist ein Spurversatz von 0 mm. In der Praxis ist man der Ansicht, daß eine Toleranz von bis zu 2 mm vertretbar ist. Ein zu großer Spurversatz kann sich negativ auf die Handlichkeit, die Lenkstabilität (Lenkerschlagen), den Geradeauslauf und die Lenkpräzision auswirken. Die einfachste Methode, den Spurversatz zu korrigieren, ist das Ausdistanzieren des Hinterrades in der Schwinge, wobei die Position des Kettenrades bei korrekter Flucht zum Antriebsritzel nicht verändert werden darf.

Aus der US 2002/0088128 A1 ist es daher bekannt, jeweils seitlich auf die Reifen eines Motorrades Vorrichtungen aufzubringen, von denen die eine seitlich Laseranordnungen trägt und die andere Meßanordnungen, auf die die Laserstrahlen fallen. Allerdings ist bei dieser Vorrichtung von Nachteil, daß aufgrund der Unebenheiten und der Elastizität der Reifen die Vorrichtungen kaum parallel zueinander ausrichtbar sind, so daß auch keine parallelen Laserstrahlen von einem Reifen zu dem anderen gesandt werden können. Diese Lösung ist aufgrund der hohen Ungenauigkeit der Messung daher ungeeignet.

Der Erfindung liegt somit die Aufgabe zugrunde, ein Verfahren und eine Vorrichtung zu schaffen, mit der einfach und schnell eine Kontrolle der Fahrwerksgeometrie eines ketten- oder riemengetriebenen Fahrzeuges erfolgen kann.

Diese Aufgabe wird erfindungsgemäß durch ein Verfahren zur Kontrolle der Fahrwerksgeometrie eines ketten- oder riemengetriebenen Fahrzeuges gelöst, das folgenden Verfahrensschritt aufweist:
- Bestimmung der Kettenflucht des Sekundärantriebes ohne Demontage von Teilen des Fahrzeuges mittels eines Lasermoduls, das an die Seitenfläche des Kettenrades bzw. der Riemenscheibe angelegt wird und dessen Laserstrahl auf den Randbereich der Kette bzw. des Riemens gerichtet ist.

Der plane Außenbereich wird hierbei an die plane Seitenfläche der Riemenscheibe bzw. des Kettenrades angelegt, so daß der Laserstrahl auf den Randbereich des Riemens oder der Kette gerichtet ist. Es ergibt sich dann bei ordnungsgemäßer Riemen- oder Kettenflucht eine Reihe von Laserpunkten auf dem Randbereich des Riemens oder der Kette über eine größere Distanz mit gleichbleibendem Randabstand. Ist dies nicht der Fall, liegt ein Rahmen-Schwingenversatz vor, wie er beispielsweise nach Unfällen vorkommt. Die Vorrichtung ist sowohl sehr klein als auch sehr robust und damit sowohl für die Kontrolle unterwegs (z.B. nach einem Reifenwechsel oder einer Panne) als auch für Routinekontrollen im Werkstattbereich geeignet. Diese Vorgehensweise hat den Vorteil, daß sie ohne Demontage von Teilen erfolgen kann, denn die Riemenscheibe bzw. das Kettenrad des Hinterrades und die Kette sind zumindest soweit zugänglich, wie es für die Kontrolle erforderlich ist. Bei dem Ritzel ist dies häufig nicht der Fall. Insbesondere bei Motorrädern sind die Antriebsritzel immer verdeckt, teilweise auch von Motorblockteilen, Hinterradschwinge oder Rahmenteilen, so daß das Freilegen des Antriebsritzels sehr aufwendig ist.

Es liegt im Rahmen der Erfindung, daß anschließend eine nicht ordnungsgemäße Kettenflucht korrigiert wird.

Ist es nicht möglich, die Kettenflucht exakt einzustellen und somit die Hinterradachse in 90°-Stellung zur Fahrzeuglängsachse anzuordnen, liegt ein Problem in der Fahrwerksgeometrie vor. Es werden somit Fahrwerksmängel erkannt, wobei diese sogar ursächlich bestimmbar sind.

Eine Weiterbildung der Erfindung besteht in folgendem weiteren Verfahrensschritt, der vor oder nach dem ersten Verfahrensschritt erfolgt:
- Bestimmung der Radflucht des Fahrzeuges, indem zwei Paare von kreissegmentförmigen Lehren, die über Andrückmittel flächig gegeneinander gedrückt werden, beidseits an der Felge mindestens eines Hinterrades und mindestens eines Vorderrades des Fahrzeuges angeordnet werden und beidseits von einem Lehrenpaar zu dem anderen Lehrenpaar parallele Laserstrahlen gesandt werden, die auf beidseits an dem anderen Lehrenpaar angeordnete Meßvorrichtungen auftreffen.

Die kreissegmentförmigen Lehren werden jeweils beidseits an die Felgenkanten eines Hinterrades und eines Vorderrades angelegt, die eine ausreichend große, glatte und gut zugängliche Anlagefläche bieten. Durch die Andrückmittel werden die Lehren gegen die Felgen gedrückt, so daß sie parallel angeordnet sind, womit auch die Laserstrahlen parallel verlaufen.

Auf diese Weise kann die Spur des Fahrzeuges schnell und präzise kontrolliert werden, so daß Verformungen beispielsweise der Gabel aufgrund eines Unfalls leicht detektierbar sind. Ebenso kann auf diese Weise beim Zusammenbau oder der Wartung des Fahrzeuges eine Spurkontrolle mit nachfolgender Spureinstellung durchgeführt werden.

Dies kann selbstverständlich auch beim Bau von sogenannten Custom-Bikes verwendet werden, wobei die Position der Motor-Getriebe-Einheit, der Kettenlauf und die Radachsen-Position erst bestimmt werden muß. Ebenfalls eignet sich diese Vorgehensweise für sogenannte Trikes sowie für Motorräder mit Seitenwagen, wobei je nach Bedarf die Lasermodule bzw. die Meßvorrichtungen verlängert werden können.

Eine andere Weiterbildung der Erfindung besteht darin, daß folgender weiterer Verfahrensschritt erfolgt:
- Bestimmung der Maßhaltigkeit der Schwinge mittels zweier Lasermodule, die beidseits in der Öffnung der Hohlachse eines Rades angeordnet werden und deren Laserstrahl auf beidseits am Schwingendrehpunkt angeordnete Lineale gerichtet ist.

Der Bereich der Schwingenlagerung am Fahrzeugrahmen ist einer der verwindungsarmen Bereiche des Fahrzeuges. Der Bereich der Hinterrad-Achse ist auf mehr Verwindung ausgelegt, sollte jedoch im statischen Zustand maßhaltig sein. Diese Maßhaltigkeit kann überprüft werden, indem die Lasermodule vorzugsweise mittels Konen und Zentriereinheiten beidseits in der Öffnung der Hohlachse eines Rades angeordnet werden und jeweils ein Laserstrahl auf am Schwingendrehpunkt angeordnete selbstzentrierende Lineale gerichtet wird. Somit kann auf den Linealen abgelesen werden, ob sich die Achsen in einer Ebene befinden.

Eine andere Weiterbildung der Erfindung besteht infolgenden weiteren Verfahrensschritt, der vor oder nach dem ersten Verfahrensschritt erfolgt:
- Bestimmung der Maßhaltigkeit der Vorderradgabel, indem ein Paar von kreissegmentförmigen Lehren, die über Andrückmittel flächig gegeneinander gedrückt werden, beidseits an der Felge des Vorderrades des Fahrzeuges angeordnet werden und beidseits von dem Lehrenpaar entlang des Gabelholms Laserstrahlen gesandt werden, die auf entlang dem Gabelholm angeordnete Meßvorrichtungen auftreffen.

Auf diese Weise kann beispielsweise ermittelt werden, ob und welcher Bereich der relativ empfindlichen Vorderradgabel verformt ist.

Bei einer Vorrichtung zur Durchführung des erfindungsgemäßen Verfahrens ist vorgesehen, daß die Vorrichtung aus mindestens zwei Paaren von kreissegmentförmigen Lehren besteht, die über an den Lehren angeordnete Andrückmittel flächig gegeneinander drückbar sind, und zur beidseitigen Anlage an der Felge mindestens eines Hinterrades und mindestens eines Vorderrades des Fahrzeuges ausgebildet sind, wobei an dem ersten Lehrenpaar beidseits Lasermodule angeordnet sind, mit denen parallele Laserstrahlen aussendbar sind, und an dem zweiten Lehrenpaar beidseits Meßvorrichtungen angeordnet sind, auf die die Laserstrahlen auftreffen.

Weiterhin ist es vorteilhaft, daß die Lasermodule jeweils um eine senkrecht zu der kreissegementförmigen Lehre stehende Achse schwenkbar und/oder daß von den Lasermodulen Strahlen in einer waagrechten Ebene aussendbar sind.

Erfindungsgemäß ist vorgesehen, daß die Andrückmittel als federelastische Bügel ausgestaltet sind, die jeweils die Lehren eines Lehrenpaares um das Rad des Fahrzeuges herum miteinander verbinden.

Eine vorteilhafte Ausgestaltung der Erfindung besteht darin, daß die Bügel in etwa dreieckförmig ausgebildet sind.

Diese erstrecken sich somit um das jeweilige Rad des Fahrzeuges und üben dennoch einen ausreichenden Anpreßdruck aus.

Ebenso ist es zweckmäßig, daß die Meßvorrichtungen als in Bohrungen der Lehren einsteckbare Lineale ausgebildet sind.

Im folgenden werden Ausfiihrungsbeispiele der Erfindung anhand von Zeichnungen beschrieben.

Es zeigen
- Fig. 1a und Fig. 1b: zwei Ausfiihrungsbeispiele einer erfindungsgemäßen Vorrichtung,
- Fig. 2a und 2b: die Kontrolle der Kettenflucht mit den beiden Vorrichtungen gemäß Fig. 1a und Fig. 1b,

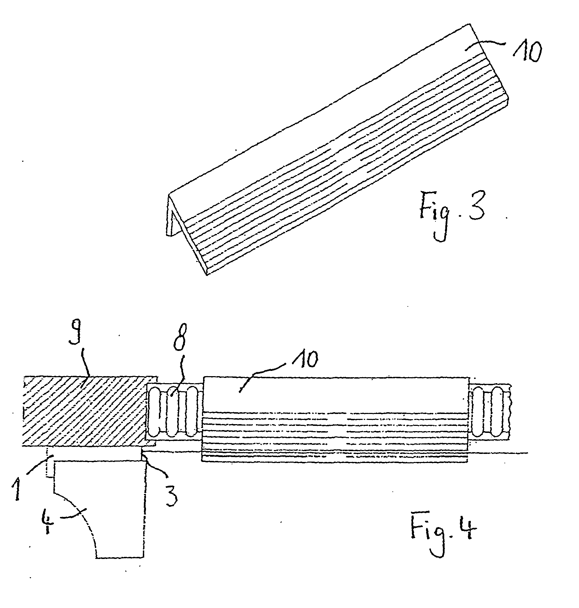

- Fig. 3: ein Hilfsmittel als Referenzteil zur Kontrolle der Riemenflucht,
- Fig. 4: die Kontrolle der Riemenflucht mit der Vorrichtung gemäß Fig. 1b und der Winkelschiene gemäß Fig. 3,
- Fig. 5: die kreissegmentförmigen Lehren zur Anlage an die Felgen,
- Fig. 6: die Verwendung der Lehren gemäß Fig. 5 zur Spurkontrolle,
- Fig. 7: eine zusätzliche Kontrolle der Vorderradgabel,
- Fig. 8: die Fallgestaltungen bei der Kontrolle nach Fig. 7.

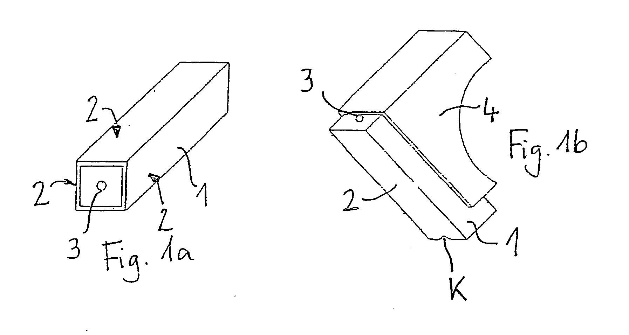

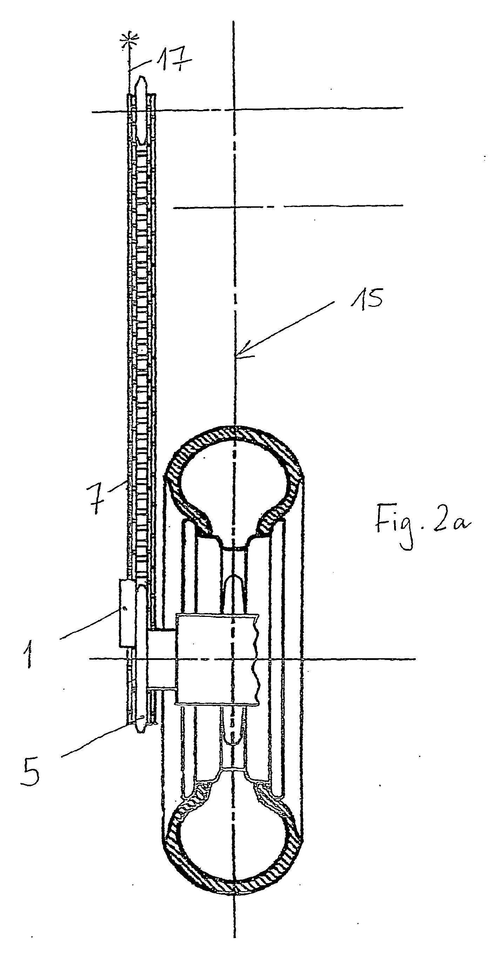

Wie aus den Fig. 1a und 1b ersichtlich, besteht die Vorrichtung zur Kontrolle der Kettenflucht aus einem Gehäuse 1 mit einem planen Außenbereich 2, der als Anlagefläche dient. In dem Gehäuse 1 ist ein Lasermodul derart angeordnet ist, daß ein parallel zu dem planen Außenbereich angeordneter Laserstrahl, der an der Austrittsstelle 3 aus dem Gehäuse 1 austritt, erzeugbar ist. Der Laser kann ein Punkt- oder ein Linienlaser sein.

Um die Vorrichtung drahtlos betreiben zu können, ist zweckmäßigerweise eine Stromversorgung (z.B. eine Batterie) für das Lasermodul in dem Gehäuse 1 angeordnet. Weiterhin ist das Gehäuse vorzugsweise mit einem Betätigungschalter für das Lasermodul sowie (Fig. 1b) mit einem Griffteil 4 versehen. Aus Fig. 1b ist weiterhin ersichtlich, daß im Winkel von 90° zu dem planen Außenbereich 2 an der der Austrittstelle gegenüberliegenden Seite eine Kerbe (K) vorgesehen ist, die an die Zähne eines Riementriebes angelegt werden kann, um die Flucht zu kontrollieren. Alternativ kann auch statt der Kerbe (K) eine keilförmige Anlagemöglichkeit vorgesehen sein.

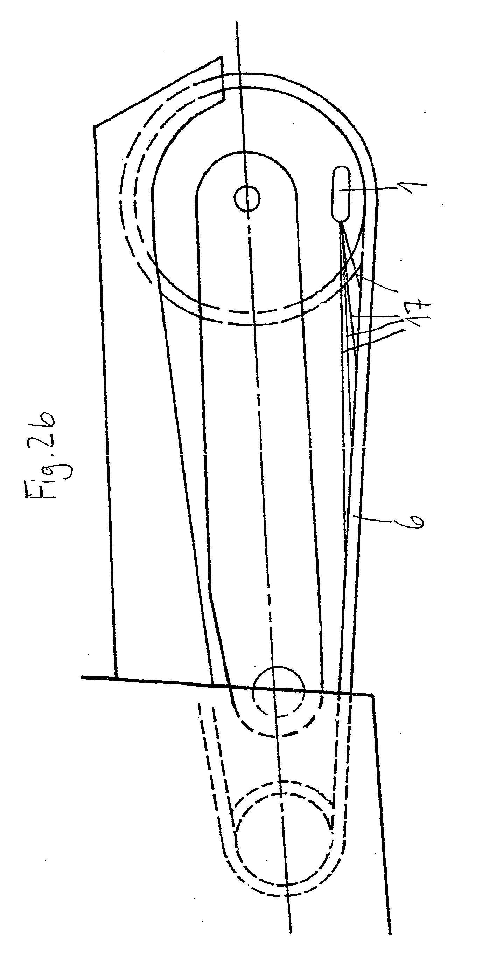

Bei Kettentrieben wird das Gehäuse 1 zur Kontrolle der Kettenflucht (Fig. 2a, 2b) mit seinem planen Außenbereich an die Stirnseite des Kettenrades 5 angelegt. Da der von dem Lasermodul erzeugte Laserstrahl soweit von dem planen Außenbereich beabstandet ist wie der Randbereich der Kette 6 von der Seitenfläche des Kettenrades 5, läuft der Laserstrahl bei korrekter Kettenflucht entlang des Randbereiches 7 der Kette 6.

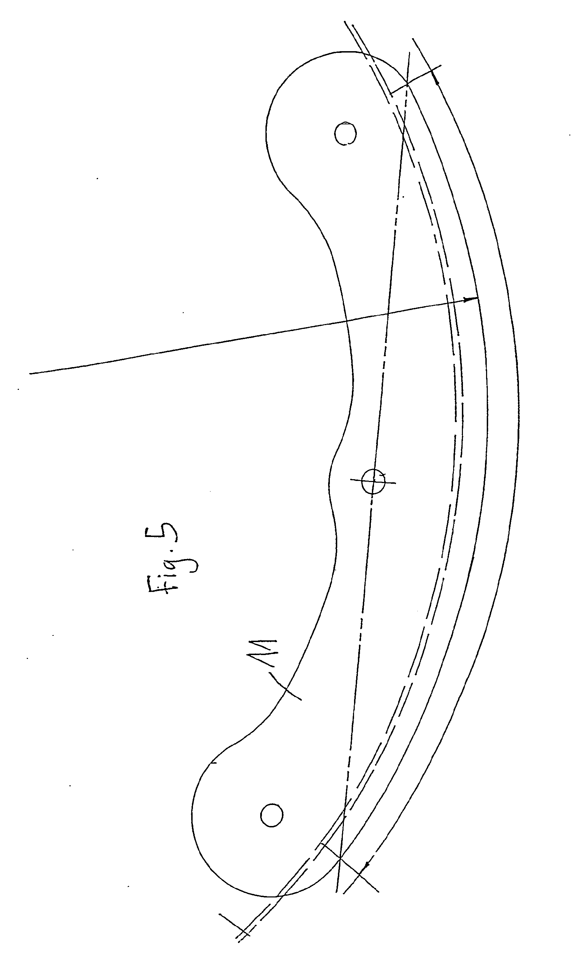

Bei der Kontrolle der Fluchtung von Riementrieben stellt sich das Problem, daß der Riemen 8 meist gegenüber der Riemenscheibe 9 zurückgesetzt ist (Fig. 4). Daher wird bei Riementrieben z.B. ein längliches Winkelprofil 10 (oder ein anderes Referenzobjekt verwendet), das an eine Kante des Riemens 8 angelegt wird und dessen parallele Meßlinien dann zur Kontrolle der Flucht des Riemens dienen können.

Alternativ kann auch vorgesehen sein, daß das Gehäuse 1 der Vorrichtung im vorderen Bereich gegenüber dem planen Außenbereich ebenfalls versetzt ist, so daß der plane Außenbereich an die Außenseite der Riemenscheibe 9 angelegt wird und der Laserstrahl auf den Riemen 8 in Richtung dessen Verlaufs gerichtet ist.

Fig. 5 zeigt eine Draufsicht auf eine der kreissegmentförmigen Lehren 11, die an die Felge bzw. an die Felgenkante des Fahrzeuges angelegt wird. Die Vorrichtung kann beispielsweise eine Länge von ca. 30 cm aufweisen, so daß eine große Anlagefläche gegeben ist. Jeweils zwei dieser Lehren 11 werden durch ein Andrückmittel 12 in Form eines federelastischen Bügels 12 zusammengedrückt, so daß sie parallel auf der Felge zur Anlage kommen. Um eine gute Krafteinleitung zu erreichen, ist der federelastische Bügel 12 in etwa dreieckförmig ausgebildet. Eines der Lehrenpaare 11 wird beidseits mit einem Lasermodul 14 versehen, das parallel zur Fahrzeuglängsachse 15 einen Laserstrahl aussendet, der auf eine Meßvorrichtung 13 in Form von Meßlinealen 13, welche in die andere Lehre eingesteckt sind und sich senkrecht zu dieser erstrecken, trifft. Ergibt sich beidseits der gleiche Abstand, liegt kein Spurversatz vor; ist der Abstand ungleich, liegt ein Spurversatz vor.

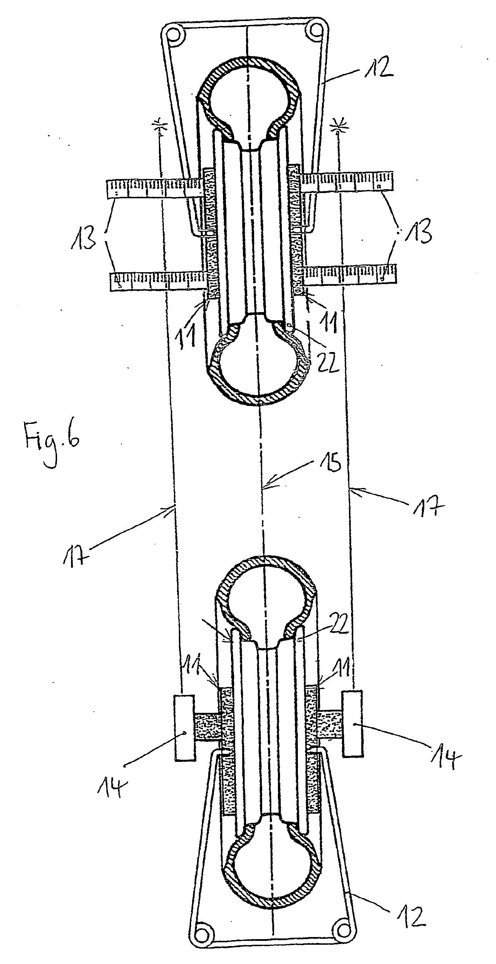

Fig. 6 zeigt schließlich, wie die erfindungsgemäße Vorrichtung zur Spurkontrolle an einem Motorrad verwendet werden kann. Hierfür werden beidseits an jedem Rad die kreissegmentförmigen Lehren 11 auf die Seitenkanten der Felgen angelegt und in dieser Stellung befestigt, z.B. über die dargestellten Federklammern 12, die sich um die Lauffläche des Rades herum von einer Seite zur anderen Seite des Rades erstrecken. Auf den Lehren 11 des einen Rades werden jeweils die erfindungsgemäße Vorrichtungen befestigt oder zumindest mit dem planen Außenbereich angelegt, so daß je ein Laserstrahl parallel zu der Längsachse des Motorrades bis hin zu den an dem anderen Rad angeordneten Lehren 11 mit senkrecht davon wegragenden Meßlinealen 13 ausgesandt wird. An den Meßlinealen 13 kann dann abgelesen werden, ob beidseits der gleiche Abstand vorliegt.

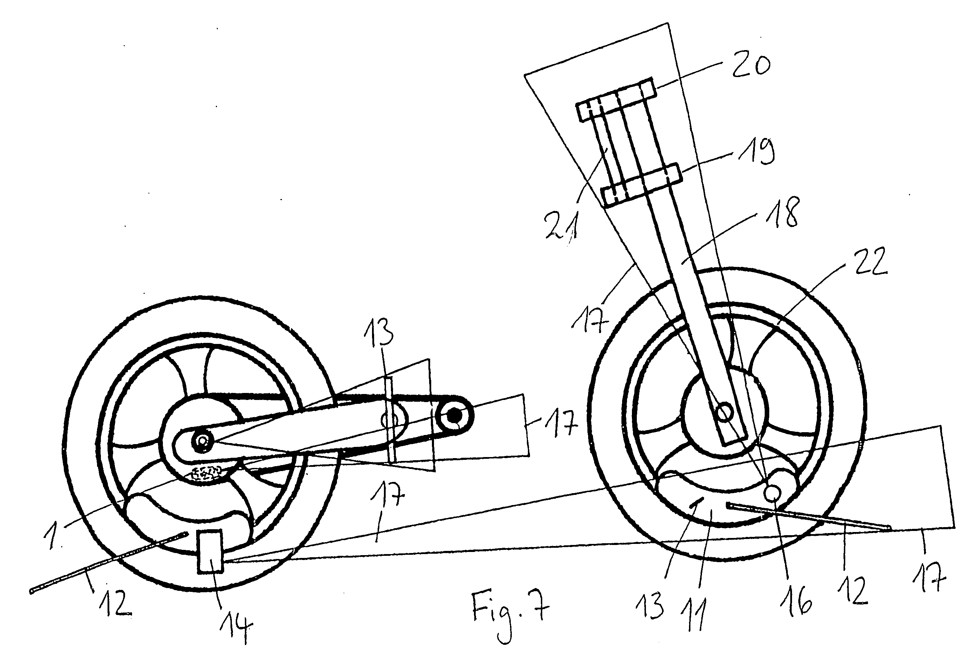

Weiterhin kann auch ein Laserstrahl 17 von zwei Lasermodulen 16 an den an der Felge 22 des Vorderrads angeordneten Lehren 11 beidseits entlang des Gabelholins 18 auf an diesem angeordnete Meßlineale und darüber hinaus bis zur oberen Gabelbrücke 19, 20 zum Lenkschaft 21 bzw. zum Steuerkopf des Rahmens gerichtet werden, wie in Fig. 7 dargestellt. Hierbei ist es möglich, daß das Lasermodul 16 ein Bestandteil der an den Lehren 11 angeordneten Meßlineale 13 ist.

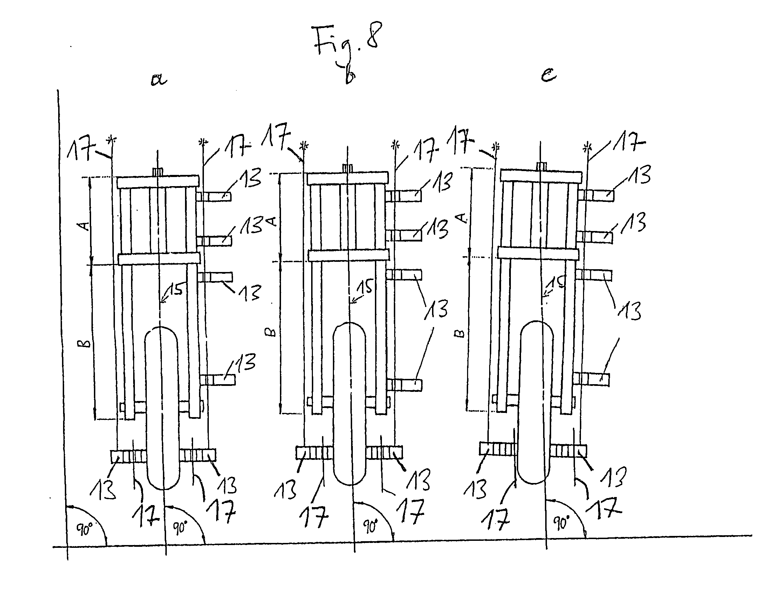

Fig. 8 zeigt in Draufsicht auf die Vorderradgabel verschiedene Fallgestaltungen und die daraus zu ziehenden Folgerungen bei einer derartigen Kontrolle der Vorderradgabel.

Bei Fig. 8a sind die Bereiche A und B parallel zur Fahrzeugmittellinie und das Vorderrad ist parallel zur Fahrzeugmittelachse angeordnet (auf allen Meßlinealen werden jeweils links und rechts gleiche Werte ermittelt). Somit sind Vorderrad, Gabel und das Steuerkopfrohr des Rahmens exakt auf der Fahrzeugmittellinie angeordnet. Die Spur des Fahrzeugs ist in Ordnung.

In Fig. 8b ist der Bereich A parallel zur Fahrzeugmittellinie angeordnet, das Vorderrad und der Bereich B nicht. Die Spur ist somit nicht ordnungsgemäß. Das Steuerkopfrohr ist parallel zur Fahrzeugmittellinie ausgerichtet und somit gegenüber dem Rahmen nicht verzogen. Der Gabelbereich B unterhalb der unteren Gabelbrücke ist jedoch beschädigt.

In Fig. 8c ist weder der Bereich A noch der Bereich B noch das Vorderrad parallel zur Fahrzeugmittellinie angeordnet. In diesem Fall ist das Steuerkopfrohr (Lenkkopf) gegenüber dem Fahrzeugrahmen verzogen. Die Gabelbereiche A und B sind unbeschädigt.

## Patentansprüche

1. Verfahren zur Kontrolle der Fahrwerksgeometrie eines ketten- oder riemengetriebenen Fahrzeuges, **gekennzeichnet durch** folgenden Verfahrensschritt:
• Bestimmung der Kettenflucht des Sekundärantriebes ohne Demontage von Teilen des Fahrzeuges mittels eines Lasermoduls, das an die Seitenfläche des Kettenrades bzw. der Riemenscheibe angelegt wird und dessen Laserstrahl auf den Randbereich der Kette bzw. des Riemens gerichtet ist.

2. Verfahren gemäß Anspruch 1, **dadurch gekennzeichnet, daß** anschließend eine nicht ordnungsgemäße Kettenflucht korrigiert wird.

3. Verfahren gemäß Anspruch 1, **gekennzeichnet durch** folgenden weiteren Verfahrensschritt, der vor oder nach dem ersten Verfahrensschritt erfolgt:
• Bestimmung der Radflucht des Fahrzeuges, indem zwei Paare von kreissegmentförmigen Lehren, die über Andrückmittel flächig gegeneinander gedrückt werden, beidseits an der Felge mindestens eines Hinterrades und mindestens eines Vorderrades des Fahrzeuges angeordnet werden und beidseits von einem Lehrenpaar zu dem anderen Lehrenpaar parallele Laserstrahlen gesandt werden, die auf beidseits an dem anderen Lehrenpaar angeordnete Meßvorrichtungen auftreffen.

4. Verfahren gemäß Anspruch 1, **gekennzeichnet durch** folgenden weiteren Verfahrensschritt, der vor oder nach dem ersten Verfahrensschritt erfolgt:
• Bestimmung der Maßhaltigkeit der Schwinge mittels zweier Lasermodule, die beidseits in der Öffnung der Hohlachse eines Rades angeordnet werden und deren Laserstrahl auf beidseits am Schwingendrehpunkt angeordnete Lineale gerichtet ist.

5. Verfahren gemäß Anspruch 1, **gekennzeichnet durch** folgenden weiteren Verfahrensschritt, der vor oder nach dem ersten Verfahrensschritt erfolgt:
• Bestimmung der Maßhaltigkeit der Vorderradgabel, indem ein Paar von kreissegmentförmigen Lehren, die über Andrückmittel flächig gegeneinander gedrückt werden, beidseits an der Felge des Vorderrades des Fahrzeuges angeordnet werden und beidseits von dem Lehrenpaar entlang des Gabelholms Laserstrahlen gesandt werden, die auf entlang dem Gabelholm angeordnete Meßvorrichtungen auftreffen.

6. Vorrichtung zum Durchführen des Verfahrens gemäß Anspruch 3, **dadurch gekennzeichnet, daß** die Vorrichtung aus mindestens zwei Paaren von kreissegmentförmigen Lehren (11) besteht, die über an den Lehren (11) angeordnete Andrückmittel (12) flächig gegeneinander drückbar sind, und zur beidseitigen Anlage an der Felge (22) mindestens eines Hinterrades und mindestens eines Vorderrades des Fahrzeuges ausgebildet sind, wobei an dem ersten Lehrenpaar (11) beidseits Lasermodule (14) angeordnet sind, mit denen parallele Laserstrahlen aussendbar sind, und an dem-zweiten Lehrenpaar (11) beidseits Meßvorrichtungen (13) angeordnet sind, auf die die Laserstrahlen auftreffen.

7. Vorrichtung gemäß Anspruch 6, **dadurch gekennzeichnet, daß** die Lasermodule (14) jeweils um eine senkrecht zu der kreissegementförmigen Lehre (11) stehende Achse schwenkbar und in einer beliebigen Schwenkstellung arretierbar sind und/oder daß von den Lasermodulen (14) Strahlen in einer waagrechten Ebene aussendbar sind.

8. Vorrichtung gemäß Anspruch 6, **dadurch gekennzeichnet, daß** die Andrückmittel (12) als federelastische Bügel (12) ausgestaltet sind, die jeweils die Lehren (11) eines Lehrenpaares (11) um das Rad des Fahrzeuges herum miteinander verbinden.

9. Vorrichtung gemäß Anspruch 8, **dadurch gekennzeichnet, daß** die Bügel (12) in etwa dreieckförmig ausgebildet sind.

10. Vorrichtung gemäß Anspruch 6, **dadurch gekennzeichnet, daß** die Meßvorrichtungen (13) als in Bohrungen der Lehren (13) einsteckbare Lineale ausgebildet sind.

## Claims

1. Method for controlling the geometry of the chassis of a chain or belt driven vehicle, **characterised by** the following step:
• Determining the chain alignment of the secondary drive, without removing parts of the vehicle, by means of a laser module that is mounted on the lateral surface of the spocket or pulley and whose laser beam is directed onto the edge area of the chain or belt respectively.

2. The method of claim 1, **characterised in that** a chain misalignment is subsequently corrected.

3. The method of claim 1, **characterised by** the following additional step, which is performed before or after the first step:
• Determining the vehicle wheel alignment by locating two pairs of gauges - said gauges being segment-of-circle-shaped and being pressed flat against each other by pressure means - on each side of the rim of at least one rear wheel and at least one front wheel of the vehicle and transmitting parallel laser beams from both sides of one of the gauge pairs to the other gauge pair, said laser beams impacting measuring devices located on both sides of said other gauge pair.

4. The method of claim 1, **characterised by** the following additional step, which is performed before or after the first step:
• Determining the dimensional accuracy of the swinging fork by means of two laser modules located in the opening at each end of the hollow axle of a wheel, their laser beams being directed onto rulers located on each side of the swinging fork pivot.

5. The method of claim 1, **characterised by** the following additional step, which is performed before or after the first step:
• Determining the dimensional accuracy of the front wheel fork by locating a pair of gauges - one on each side of the rim of the vehicle's front wheel - said gauges being segment-of-circle-shaped and being pressed flat against each other by pressure means, and transmitting laser beams from both sides of the gauge pair, said laser beams impacting measuring devices located along the fork leg.

6. A device for carrying out the method of claim 3, **characterised in that** the device consists of at least two pairs of segment-of-circle-shaped gauges (11) that can be pressed flat against each other by pressure means (12) located on the gauges (11), said gauges being configured such as to fit against each side of the rim (22) of at least one rear wheel and at least one front wheel of the vehicle, laser modules (14) with which parallel laser beams can be transmitted being located on both sides of the first pair of gauges (11), and measuring devices (13) on which the laser beams impact being located on both sides of the second pair of gauges (11).

7. The device of claim 6, **characterised in that** each of the laser modules (14) is pivotable about an axis perpendicular to the segment-of-circle-shaped gauge (11) and can be locked in any desired pivoting position, and/or that beams can be transmitted in a horizontal plane from the laser modules (14).

8. The device of claim 6, **characterised in that** the pressure means (12) are configured as spring-elastic members (12) that connect each of the gauges (11) of a gauge pair (11) with each other around the vehicle wheel.

9. The device of claim 8, **characterised in that** the member (12) is approximately triangular.

10. The device of claim 6, **characterised in that** the measuring devices (13) are configured as rulers that can be inserted into holes in the gauges (11).

## Revendications

1. Procédé de contrôle du châssis d'un véhicule entraîné par chaîne ou par courroie, **caractérisé par** l'étape de procédé suivante :
- Détermination de l'alignement de la chaîne de l'entraînement secondaire sans démontage de pièces du véhicule au moyen d'un module laser disposé sur la surface latérale de la roue dentée à chaîne ou sur la poulie de courroie et dont le faisceau laser est dirigé vers la zone de bord de la chaîne ou de la courroie.

2. Procédé selon la revendication 1, **caractérisé en ce qu'**un alignement non correct de la chaîne est ensuite corrigé.

3. Procédé selon la revendication 1, **caractérisé par** l'étape de procédé supplémentaire suivante qui est réalisée avant ou après la première étape de procédé :
- Détermination de l'alignement de la roue du véhicule en disposant des deux côtés de la jante d'au moins une roue arrière et d'au moins une roue avant du véhicule deux paires de calibres ayant la forme de segments de cercle et étant appliquées à plat les unes vers les autres par des moyens de serrage, et en envoyant de chaque côté d'une paire de mâchoires en direction de l'autre paire de mâchoires des faisceaux lasers parallèles qui tombent sur des dispositifs de mesure disposés des deux côtés de l'autre paire de mâchoires.

4. Procédé selon la revendication 1, **caractérisé par** l'étape de procédé supplémentaire suivante qui est réalisée avant ou après la première étape de procédé :
- Détermination du respect des tolérances du bras oscillant à l'aide de deux modules laser disposés des deux côtés dans l'ouverture de l'axe creux d'une roue et dont les faisceaux laser sont dirigés vers des règles disposées des deux côtés sur le point de pivot du bras oscillant.

5. Procédé selon la revendication 1, **caractérisé par** l'étape de procédé supplémentaire suivante qui est réalisée avant ou après la première étape de procédé :
- Détermination du respect des tolérances de la fourche de roue avant en plaçant des deux côtés de la jante de la roue avant du véhicule une paire de mâchoires ayant la forme de segments de cercle et appliquées à plat l'une contre l'autre par des moyens de serrage, et en envoyant de chaque côté de la paire de mâchoires des faisceaux laser le long de la jambe de la fourche qui tombent sur des dispositifs de mesure disposés le long de la jambe de la fourche.

6. Dispositif pour la mise en oeuvre du procédé selon la revendication 3, **caractérisé en ce que** le dispositif se compose d'au moins deux paires de mâchoires ayant la forme de segments de cercle (11) qui peuvent être pressées à plat les unes contre les autres par des moyens de serrage (12) disposés sur les mâchoires (11) et qui sont conçus pour être disposées des deux côtés de la jante (22) d'au moins une roue arrière et d'au moins une roue avant du véhicule, des modules laser (14) pouvant émettre des faisceaux laser parallèles étant disposés des deux côtés sur la première paire de mâchoires (11) et des dispositifs de mesure (13) étant disposés des deux côtés sur la deuxième paire de mâchoires (11) et sur lesquels tombent les faisceaux laser.

7. Dispositif selon la revendication 6, **caractérisé en ce que** chacun des modules laser (14) peut pivoter autour d'un axe perpendiculaire aux mâchoires (11) en forme de segments de cercle et peut être bloqué dans n'importe quelle position de basculement et/ou **en ce que** les modules laser (14) peuvent émettre des faisceaux dans un plan horizontal.

8. Dispositif selon la revendication 6, **caractérisé en ce que** les moyens de serrage (12) sont réalisés sous la forme de cintre (12) flexibles qui relient ensemble chacune des mâchoires (11) d'une paire de mâchoires (11) en contournant la roue du véhicule.

9. Dispositif selon la revendication 8, **caractérisé en ce que** les cintres (12) sont sensiblement triangulaires.

10. Dispositif selon la revendication 6, **caractérisé en ce que** les dispositifs de mesure (13) sont conçus comme des règles pouvant être enfichées dans des trous réalisés dans les mâchoires (11).
